# EUROPEAN PATENT APPLICATION

(11) **EP 3 376 457 A1**
(43) Date of publication of application: **19.09.2018**
(21) Application number: 18162181.4
(22) Date of filing: 16.03.2018
(51) Int. Cl.: G06Q 20/20, G06Q 30/06, G06Q 50/12

(54) **ORDER MANAGEMENT SYSTEM**

(30) Priority: 17.03.2017 JP 2017053233
(71) Applicant: Toshiba TEC Kabushiki Kaisha, Tokyo 141-8562 (JP)
(72) Inventor: KAMAMOTO, Shunichiro, Shinagawa-ku,, Tokyo 141-8562 (JP)
(74) Representative: Takeuchi, Maya

(57) **Abstract**

A communications network includes a plurality of devices connected to a first network, the devices including a point-of-sale terminal, a wireless hand-held terminal, and a wireless access point by which the wireless hand-held terminal is connected to the first network, a router that connects the first network to a second network, a plurality of user terminals connected to the second network, including first and second user terminals, and a server connected to the second network, wherein the server is configured to communicate with the wireless hand-held terminal to receive group data, generate first and second user interfaces from the group data, transmit the first and second user interfaces to the first and second user terminals, respectively, and responsive to inputs made through the first and second user interfaces, generate and transmit to the point-of-sale terminal first transaction data for the first user and second transaction data for the second user.

## Description

### FIELD

The present invention relates to the field of transaction system technologies in general, and embodiments described herein relate in particular to a communication network including an order management system.

### BACKGROUND

An order management system handles orders made by each of a plurality of customers belonging to one group as one transaction in a restaurant.

When settling the money for orders managed by this type of order management system, the total fee of all orders for one group is collectively settled, in general.

Accordingly, when multiple customers belonging to one group are all payers, one of the plurality of payers receives cash to be paid from the other payers and then collectively settles. Thus, the process is cumbersome.

When the multiple payers each try to settle individually, a store clerk calculates a settlement fee for each payer, based on a report of the payer at a check-out corner or the like, and sequentially settles each settlement fee. Accordingly, it takes lots of time and effort for settlement for one group.

To solve such problem, there is provided a communications network comprising:
a plurality of devices connected to a first network, the plurality of devices including a point-of-sale (POS) terminal, a wireless hand-held terminal, and a wireless access point by which the wireless hand-held terminal is connected to the first network;
a router that connects the first network to a second network;
a plurality of user terminals connected to the second network, including a first user terminal and a second user terminal; and
a server connected to the second network, wherein the server is configured to communicate with the wireless hand-held terminal to receive group data, generate first and second user interfaces from the group data, transmit the first user interface to the first user terminal and the second user interface to the second user terminal, and responsive to inputs made through the first and second user interfaces and received by the server, generate and transmit to the POS terminal at least first transaction data for the first user and second transaction data for the second user.

Preferably, the group data comprise items purchased by a group of users including the first user and the second user.

Preferably still, the first and second user interfaces each include a complete list of the items purchased by the group of users.

Preferably yet, the inputs to the first user interface include a first selection of the items from the list and the inputs to the second user interface include a second selection of the items from the list.

Suitably, the transaction data for the first user is generated based on the first selection and the transaction data for the second user is generated based on the second selection.

Suitably still, the server is further configured to:
receive settlement data from the POS terminal for each separate transaction data,
determine, based on the received settlement data, whether settlement has been completed for all the items purchased by the group of users, and
when the settlement has been completed for all the items purchased by the group of users, transmit completion screen data to the POS terminal for display by the POS terminal a completion screen indicating settlement of all the items purchased by the group of users.

The invention also relates to, in a communications network comprising a plurality of devices connected to a first network, the plurality of devices including a point-of-sale (POS) terminal, a wireless hand-held terminal, and a wireless access point by which the wireless hand-held terminal is connected to the first network, a router that connects the first network to a second network, a plurality of user terminals connected to the second network, including a first user terminal and a second user terminal, and a server connected to the second network, a method of processing group data separately for the first user and the second user, the method comprising:
receiving the group data from the wireless hand-held terminal to the server;
generating first and second user interfaces from the group data;
transmitting the first user interface to the first user terminal and the second user interface to the second user terminal; and
responsive to inputs made through the first and second user interfaces and received by the server, generate and transmit to the POS terminal at least first transaction data for the first user and second transaction data for the second user.

Preferably, in the method, the group data comprise items purchased by a group of users including the first user and the second user.

Preferably still, in the method, the first and second user interfaces each include a complete list of the items purchased by the group of users.

Preferably yet, in the method, the inputs to the first user interface include a first selection of the items from the list and the inputs to the second user interface include a second selection of the items from the list.

Suitably, in the method, the transaction data for the first user is generated based on the first selection and the transaction data for the second user is generated based on the second selection.

Suitably still, the method further comprises:
receiving settlement data from the POS terminal for each separate transaction data;
determining, based on the received settlement data, whether settlement has been completed for all the items purchased by the group of users; and
when the settlement has been completed for all the items purchased by the group of users, transmitting completion screen data to the POS terminal for display by the POS terminal a completion screen indicating settlement of all the items purchased by the group of users.

The invention further relates to a non-transitory computer readable medium comprising instructions to be executed in a server of a communications network, wherein the communication network comprises a plurality of devices connected to a first network, the plurality of devices including a point-of-sale (POS) terminal, a wireless hand-held terminal, and a wireless access point by which the wireless hand-held terminal is connected to the first network, a router that connects the first network to a second network, a plurality of user terminals connected to the second network, including a first user terminal and a second user terminal, and the server, which is connected to the second network, and wherein the instructions, when executed in the server, cause the server to carry out a method of processing group data separately for the first user and the second user, said method comprising:
receiving the group data from the wireless hand-held terminal to the server;
generating first and second user interfaces from the group data;
transmitting the first user interface to the first user terminal and the second user interface to the second user terminal; and
responsive to inputs made through the first and second user interfaces and received by the server, generate and transmit to the POS terminal at least first transaction data for the first user and second transaction data for the second user.

Preferably, in the method, the group data comprise items purchased by a group of users including the first user and the second user.

Preferably still, in the method, the first and second user interfaces each include a complete list of the items purchased by the group of users.

Preferably yet, in the method, the inputs to the first user interface include a first selection of the items from the list and the inputs to the second user interface include a second selection of the items from the list.

Suitably, in the method, the transaction data for the first user is generated based on the first selection and the transaction data for the second user is generated based on the second selection.

Suitably still, the method further comprises:
receiving settlement data from the POS terminal for each separate transaction data;
determining, based on the received settlement data, whether settlement has been completed for all the items purchased by the group of users; and
when the settlement has been completed for all the items purchased by the group of users, transmitting completion screen data to the POS terminal for display by the POS terminal a completion screen indicating settlement of all the items purchased by the group of users.

The invention also concerns a server accessed from a plurality of user terminals including a first user terminal and a second user terminal, the server configured to:
communicate with a wireless hand-held terminal to receive group data,
generate first and second user interfaces from the group data,
transmit the first user interface to the first user terminal and the second user interface to the second user terminal, and
responsive to inputs made through the first and second user interfaces and received by the server, generate and transmit to a point-of-sale (POS) terminal at least first transaction data for a first user and second transaction data for a second user.

The invention further concerns an order management system comprising:
a plurality of devices connected to a first network, the plurality of devices including a point-of-sale (POS) terminal, a wireless hand-held terminal, and a wireless access point by which the wireless hand-held terminal is connected to the first network;
a router that connects the first network to a second network;
a plurality of user terminals connected to the second network, including a first user terminal and a second user terminal; and
the server according to any one of claims 1 to 6 connected to the second network.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating a schematic configuration of an order management system according to one embodiment.
FIG. 2 is a block diagram illustrating a configuration of a POS terminal.
FIG. 3 is a block diagram illustrating a configuration of a web server.
FIG. 4 is a diagram illustrating an example of order reception data.
FIG. 5 is a flowchart illustrating a sequence of order reception processing performed by a processor.
FIG. 6 is a flowchart illustrating a sequence of payer designation processing performed by the processor.
FIG. 7 is a diagram illustrating an example setting screen.
FIG. 8 is a diagram illustrating another example of order reception data.
FIG. 9 is a diagram illustrating another example setting screen.
FIG. 10 is a diagram illustrating another example of order reception data.
FIG. 11 is a diagram illustrating another example setting screen.
FIG. 12 is a diagram illustrating another example of order reception data.
FIG. 13 is a diagram illustrating another example setting screen.
FIG. 14 is a flowchart illustrating a sequence of settlement accounting processing.

### DETAILED DESCRIPTION

Embodiments provide an order management system which can settle in such a manner that an order managed as one transaction is individually paid by a plurality of payers, while suppressing an increase in workload of a store clerk.

A communications network includes a plurality of devices connected to a first network, the plurality of devices including a point-of-sale (POS) terminal, a wireless hand-held terminal, and a wireless access point by which the wireless hand-held terminal is connected to the first network, a router that connects the first network to a second network, a plurality of user terminals connected to the second network, including a first user terminal and a second user terminal, and a server connected to the second network, wherein the server is configured to communicate with the wireless hand-held terminal to receive group data, generate first and second user interfaces from the group data, transmit the first user interface to the first user terminal and the second user interface to the second user terminal, and responsive to inputs made through the first and second user interfaces and received by the server, generate and transmit to the POS terminal at least first transaction data for the first user and second transaction data for the second user.

Hereinafter, an example of an embodiment will be described with reference to the drawings. In the present embodiment, an example in which an order management system is applied to a order management system for settlement of money at a restaurant that provides a food providing service according to an order of a customer will be described.

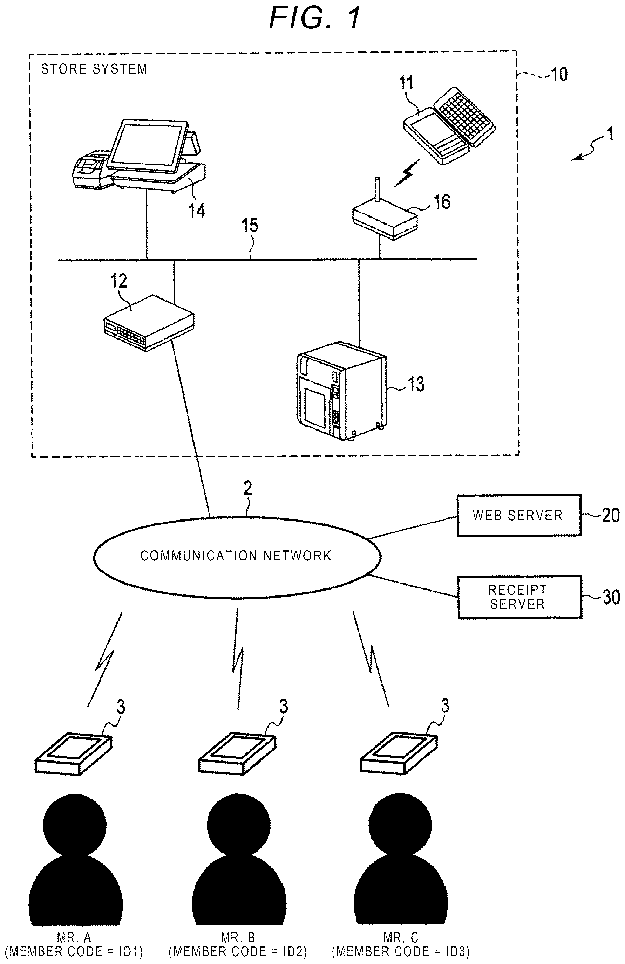

FIG. 1 is a diagram illustrating a configuration of an order management system 1 according to the present embodiment.

The order management system 1 includes a store system 10, a web server 20, and a receipt server 30.

The store system 10 is provided in the above-described restaurant, and includes a hand-held terminal 11, a station 12, a slip printer 13, and a POS terminal 14, each connected to a local area network (LAN) 15. However, the hand-held terminal 11 is connected to the LAN 15 via a wireless access point 16. The hand-held terminal 11, the slip printer 13, the POS terminal 14, and the wireless access point 16 are illustrated as single devices in FIG. 1, but each may be plural, and the number of devices is arbitrary for each.

The hand-held terminal 11 is a terminal device for receiving an input of a store clerk for inputting an order. The hand-held terminal 11 wirelessly transmits an item number of an ordered commodity in accordance with an input operation. An order number wirelessly transmitted from the hand-held terminal 11 is transmitted to the station 12 via the wireless access point 16 and the LAN 15.

The station 12 is installed in, for example, a back office of a restaurant, collects the order number transmitted from the hand-held terminal 11, generates order reception data for each group of customers, and manages the order reception data. The station 12 transmits the order reception data to the web server 20 via the communication network 2. The station 12 functions as a router or a gateway for enabling the POS terminal 14 to communicate with the web server 20 via the communication network 2. However, the router or the gateway function is not necessarily provided in the station 12, and another device functioning as the router or the gateway may be connected between the communication network 2 and the LAN 15.

The slip printer 13 prints an order slip for a customer to bring to a checkout counter for settlement. The slip printer 13 may also print an order slip for notifying a cook of the contents of the order.

The POS terminal 14 is installed in, for example, a checkout counter of a restaurant, and performs processing for settling the money relating to the food of a customer, based on order reception data managed by the station 12.

The web server 20 receives a setting of a customer relating to payment sharing which will be described below, and generates individual accounting data. The web server 20 transmits the individual accounting data to the POS terminal 14 via the communication network 2.

The receipt server 30 accumulates electronic receipt data. The receipt server 30 provides an electronic receipt service to a member, based on the accumulated data, such that the member can confirm afterwards the payment settlement made by the member at the restaurant.

A customer of the restaurant accesses the web server 20 via the communication network 2 by using the information terminal 3 possessed by the customer, and makes settings relating to the payment sharing. In addition, if the customer is a member of the electronic receipt service, the customer accesses the receipt server 30 via the communication network 2 by using the information terminal 3 and can use the electronic receipt service. Typically, the information terminal 3 is a smartphone, a tablet terminal or the like, but may be any device as long as the device can access the web server 20 and the receipt server 30 via the communication network 2. Separate information terminals 3 may be used for accessing the web server 20 and accessing the receipt server 30, respectively.

The communication network 2 enables various types of communication as described above. The communication network 2 is typically a combination of a mobile communication network and the Internet. However, the communication network 2 may be anything else, such as a combination of, for example, a wireless LAN and a virtual private network (VPN).

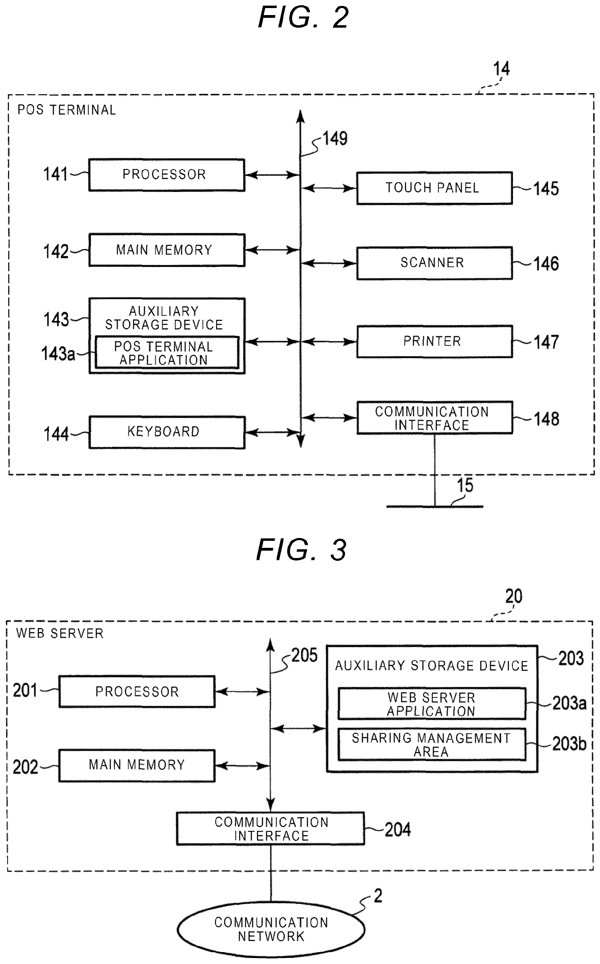

FIG. 2 is a block diagram illustrating a configuration of the POS terminal 14.

The POS terminal 14 includes a processor 141, a main memory 142, an auxiliary storage device 143, a keyboard 144, a touch panel 145, a scanner 146, a printer 147, a communication interface 148, and a transmission system 149.

FIG. 3 is a block diagram illustrating a configuration of the web server 20.

The web server 20 includes a processor 201, a main memory 202, an auxiliary storage device 203, a communication interface 204, and a transmission system 205.

That is, each of both the POS terminal 14 and the web server 20 includes a computer with the processors 141 and 201, the main memories 142 and 202, and the auxiliary storage devices 143 and 203 respectively connected to each other through the transmission systems 149 and 205.

The processors 141 and 201 each correspond to a central processor of the respective computers. The processors 141 and 201 control each unit to realize various functions of the POS terminals 14 and the web server 20, respectively, according to an operating system and an application program.

The main memories 142 and 202 correspond to a main memory of the respective computers. The main memories 142 and 202 include a nonvolatile memory area and a volatile memory area. The main memories 142 and 202 store an operating system and an application program in the nonvolatile memory area. In addition, the main memories 142 and 202 may store data necessary for the processors 141 and 201, respectively, to execute various types of information processing in a nonvolatile or volatile memory area. The main memories 142 and 202 use the volatile memory area as a work area where data is appropriately rewritten by the processors 141 and 201, respectively.

The auxiliary storage devices 143 and 203 each correspond to an auxiliary storage portion of the respective computer. The auxiliary storage devices 143 and 203 are, for example, an electric erasable programmable read-only memory (EEPROM), a hard disc drive (HDD), a solid state drive (SSD), or the like. The auxiliary storage devices 143 and 203 store data used by the processors 141 and 201 for performing various types of information processing and data generated by processing performed by the processors 141 and 201, respectively. The auxiliary storage devices 143 and 203 may also store the above-described application program.

The communication interfaces 148 and 204 are each an interface for data communication via the communication network 2. For example, a well-known communication device for performing data communication via the Internet can be used as the communication interfaces 148 and 204.

The transmission systems 149 and 205 include a bus line including an address bus, a data bus, and the like, and an interface circuit for connecting the respective units to the bus line. The transmission systems 149 and 205 transmit data and a signal exchanged between the above-described components connected to each other.

The POS terminal 14 includes a keyboard 144, a touch panel 145, a scanner 146, and a printer 147, as peripheral devices of the computer, in addition to the computer described above.

The keyboard 144 includes a variety of keys and receives input corresponding to an instruction of a store clerk by pressing the keys.

The touch panel 145 displays a screen for presenting information to the store clerk. In addition, the touch panel 145 receives input of an instruction of the store clerk by touching the displayed screen.

The scanner 146 reads a symbol code such as a bar code or a two-dimensional code. The scanner 146 notifies the processor 141 of the code data represented in the read symbol code.

The printer 147 issues a receipt by printing a receipt image on a receipt paper.

The auxiliary storage devices 143 and 203 store different application programs. In addition, the functions of the auxiliary storage devices 143 and 203 at the time of information processing respectively performed by the processors 141 and 201 based on the application programs are different between the POS terminal 14 and the web server 20.

One of the application programs stored in the auxiliary storage device 143 is a POS terminal application 143a which is a program for realizing various functions of the POS terminal. The corresponding information processing of the processor 141 will be described below.

One of the application programs stored in the auxiliary storage device 203 is a web server application 203a which is a program for generating individual accounting data.

A part of a storage area of the auxiliary storage device 203 is used as a sharing management area 203b. The sharing management area 203b is used for data editing for generating the individual accounting data.

Typically, the POS terminal 14 is provided in a state where the POS terminal application 143a is stored in the auxiliary storage device 143. However, the POS terminal 14 and the POS terminal application 143a may be provided to a user in a state where the POS terminal application 143a is not stored in the auxiliary storage device 143. Alternatively, the POS terminal application 143a may be provided separately from the POS terminal 14 and then stored in the main memory 142 or the auxiliary storage device 143 by operation of a user. Further, under an operation of a user, the web server application 203a is written to the auxiliary storage device 203 included in a computer device.

If a general-purpose computer device such as a server is used as the hardware of the web server 20, the computer device and the web server application 203a are individually provided to a user. Under an operation of the user, the web server application 203a is written to the auxiliary storage device 203 included in the computer device. At this time, the web server application 203a is transferred to the auxiliary storage device 203a from a removable recording medium such as a magnetic disk, a magneto-optical disk, an optical disk or a semiconductor memory, or is transferred by communication via a network. However, the web server 20 may be provided in a state where the web server application 203a is written to the auxiliary storage device 203.

Next, an operation of the order management system 1 configured as described above will be described. Contents of the processing to be described below are merely an example, and as long as the same results are obtained, replacing the sequence of a part of the processing or appropriately using other various types of processing can be performed.

In the following, a case where a group of three persons, Mr. A, Mr. B, and Mr. C as illustrated in FIG. 1, eats food at a restaurant where the store system 10 is installed will be specifically described. It is assumed that each of Mr. A, Mr. B and Mr. C are members of the electronic receipt service provided by the receipt server 30 and each corresponding member code is ID1, ID2, and ID3.

Each order of Mr. A, Mr. B, and Mr. C is heard by a store clerk of the restaurant and is input to the hand-held terminal 11 by operation of the store clerk.

By doing so, the hand-held terminal 11 generates order reception data in accordance with the above-described operation, and transmits the order reception data to the station 12 via the wireless access point 16 and the LAN 15.

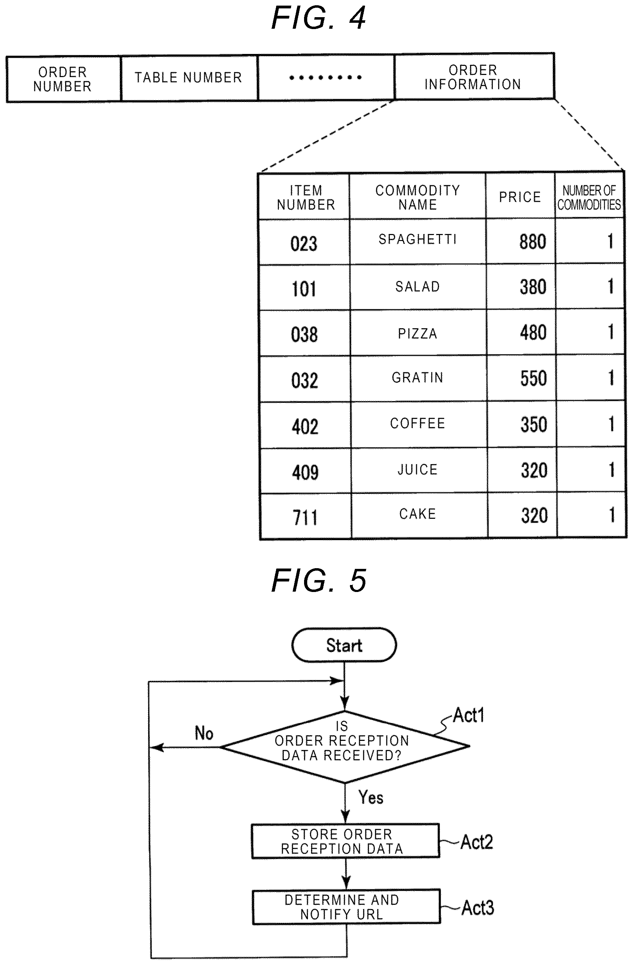

FIG. 4 is a diagram illustrating an example of the order reception data.

As illustrated in FIG. 4, the order reception data includes management information such as an order number, a table number, and order information.

The order number is determined by the hand-held terminal 11 in order to individually identify handling of each of a plurality of customer groups. The order number may be determined by the station 12. The table number is assigned in advance to the table where the customer group uses, and is input by the store clerk. The management information may include arbitrary information such as order reception time.

The order information includes a record for each of the ordered commodities. The record includes information of an item number, a commodity name, price, and the amount of commodities. The item number is predetermined in order to identify each commodity item. The commodity name is a name of the corresponding commodity. The price is a unit price of the corresponding commodity. The amount of commodities is the number of orders for the corresponding commodity.

Here, it is assumed that Mr. A orders "salad" and "gratin", Mr. B orders "pizza" and "juice", and Mr. C orders "spaghetti", "coffee", and "cake." Accordingly, the order information includes record on each of the ordered commodities. However, the order reception data does not include information for distinguishing who orders each commodity.

Thus, the order information represents a transaction list which is a list of a plurality of items which is a target of one transaction which is not settled.

The station 12 receives order reception data when the order reception data is transmitted by the LAN 15. The station 12 stores the order reception data in an embedded storage device or an externally attached storage device. The station 12 controls the slip printer 13 so as to print an order slip based on the order reception data. The order slip represents the contents of the order such that a customer can confirm the order slip, and is handed to the customer at the store before settlement is made. The hand-held terminal 11 may transmit an item code of the commodity to the station 12 each time an operation for inputting the ordered commodity is performed. The station 12 may generate the order reception data described above.

The above-described processing may be the same processing that is performed in a similar existing store system. However, in the present embodiment, the station 12 performs the following processing in addition to the above processing.

When the order reception data is received, the station 12 transmits the order reception data to the web server 20 via the communication network 2 prior to printing the order slip. At this time, the station 12 includes a store code in the order reception data instead of the table number. The store code is identification information predetermined for identifying a restaurant where the station 12 is installed. If the web server 20 processes only the order reception data transmitted from one restaurant, the store code need not be included in the order reception data. In addition, if it is determined that the order number does not overlap between a plurality of restaurants, the store code need not be included in the order reception data. If a uniform resource locator (URL) is notified from the web server 20 as described below, the station 12 receives the URL. The station 12 controls the slip printer 13 such that a two-dimensional code in which the URL is set is additionally represented in the above-described order slip. Instead of the two-dimensional code, another code symbol such as a bar code may be used.

FIG. 5 is a flowchart illustrating a sequence of the order reception processing performed by the processor 201 of the web server 20. When the web server 20 is in a normal operation state, the processor 201 constantly performs the order reception processing illustrated in FIG. 5, based on the web server application 203a.

In Act 1, the processor 201 waits for receipt of the order reception data.

If the order reception data transmitted from the station 12 is transmitted to the web server 20 through the communication network 2 as described above, the communication interface 204 receives the order reception data. In response to the start of such reception, the processor 201 determines that the answer to Act 1 is Yes, and proceeds to Act 2.

In Act 2, the processor 201 stores the order reception data received by the communication interface 204 in the sharing management area 203b.

In Act 3, the processor 201 accesses the web server 20 via the communication network 2, and determines the URL associated with the order reception data stored in Act 2. The processor 201 notifies the station 12 that is a transmission source of the received order reception data of the URL via the communication network 2. The URL is included in the two-dimensional code printed on the above-described order slip.

Thereafter, the processor 201 returns to Act 1, and next, waits for receipt of order reception data.

Meanwhile, it is assumed that, Mr. A, Mr. B, and Mr. C individually settle the respective money for food, and wish to use an electronic receipt service for each settlement. In this case, each of Mr. A, Mr. B, and Mr. C causes the information terminal 3 to read a two-dimensional code printed on the order slip. Each person operates the information terminal 3 so as to access the URL included in the two-dimensional code. In accordance with the operation, the information terminal 3 accesses the web server 20 by the above-described URL. For accessing the web server 20 performed by the information terminal 3, a well-known function realized by cooperation with an application that reads a two-dimensional code and a web browser can be used. Alternatively, the above-described access may be realized by a function obtained by incorporating a function of reading the two-dimensional code and a function of the web browser into the application of the information terminal 3 for using the electronic receipt service.

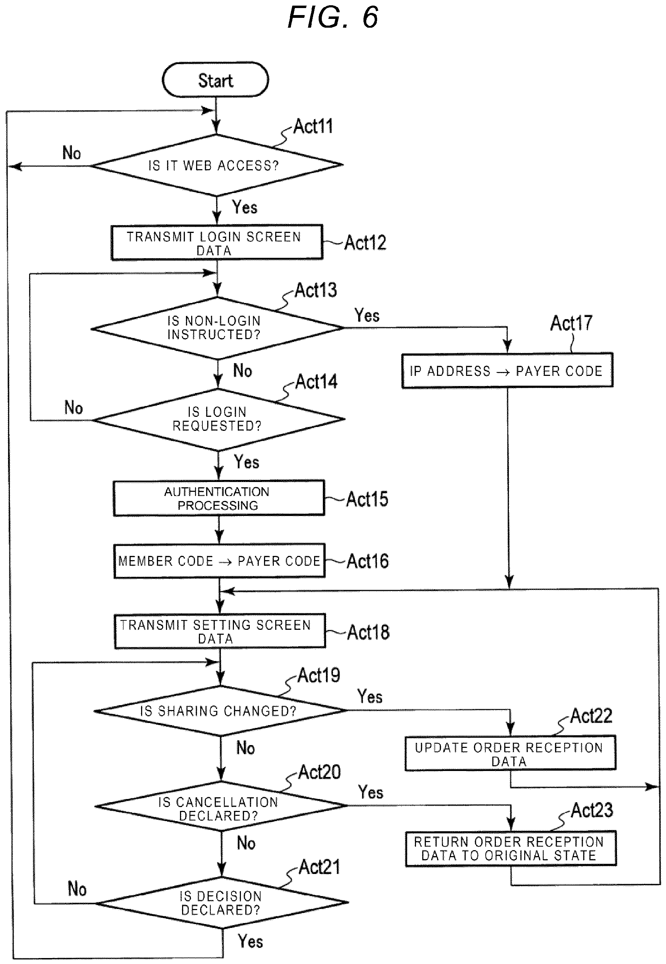

FIG. 6 is a flowchart illustrating a sequence of the payer designation processing performed by the processor 201 of the web server 20. When the web server 20 is in a normal operation state, the processor 201 constantly performs the payer designation processing separately from the processing illustrated in FIG. 5, based on the web server application 203 a.

In Act 11, the processor 201 waits for web access to be made. If the web access from the information terminal 3 is made as described above, the processor 201 determines that an answer is Yes and proceeds to Act 12.

In Act 12, the processor 201 transmits login screen data for displaying a login screen to the information terminal 3 via the communication network 2. The login screen is a screen for allowing an operator of the information terminal 3 to input authentication information for member authentication. It is assumed that the login screen also receives an operation for an operator of the information terminal 3 to declare that it is not logged in.

If the login screen is displayed on the information terminal 3, the operator of the information terminal 3 inputs the authentication information. Typically, the operator inputs a member code assigned to himself/herself and a predetermined password. Then, the information terminal 3 requests the web server 20 to log in in accordance with the notification of the authentication information which is input. In addition, if an operator of the information terminal 3 is a non-member, an operation for declaring that log-in is not made is performed. In such a case, the information terminal 3 instructs the web server 20 not to log in.

In Act 13, the processor 201 confirms whether or not non-login is instructed. If the non-login is not instructed, the processor 201 determines that an answer is No, and proceeds to Act 14.

In Act 14, the processor 201 confirms whether or not login is requested. If the login is not requested, the processor 201 determines that an answer is No, and returns to Act 13.

Thus, the processor 201 waits for non-login to be instructed or login to be requested in Act 13 and Act 14. If the login is requested, the processor 201 determines that an answer is Yes in Act 14 and proceeds to Act 15.

In Act 15, the processor 201 performs authentication processing using authentication information notified at the time of login request. The authentication processing may be a well-known processing. If the authentication is successful, the processor 201 proceeds to Act 16. Illustration of processing when the authentication fails is omitted. For example, after the processor 201 notifies the information terminal 3 of an authentication error, the processor returns to Act 11 or Act 12.

In Act 16, the processor 201 sets a member code included in the authentication information as a payer code.

Meanwhile, if non-login is instructed from the information terminal, the processor 201 determines that an answer is Yes in Act 13, and proceeds to Act 17.

In Act 17, the processor 201 sets an IP address of the information terminal 3 as the payer code. Here, arbitrary information that can temporarily identify the information terminal 3 can also be used instead of the IP address.

If the processor 201 ends setting the payer code in Act 16 or Act 17, the processor 201 proceeds to Act 18 in either case.

In Act 18, the processor 201 transmits setting screen data to the information terminal 3 via the communication network 2. The setting screen is a screen for allowing an operator to select the commodity for which the operator of the information terminal 3 pays money from among the commodities indicated in one item of order reception data which is an editing target. Among the order reception data stored in the sharing management area 203b, the processor 201 selects the editing target associated with the URL used for access from the information terminal 3.

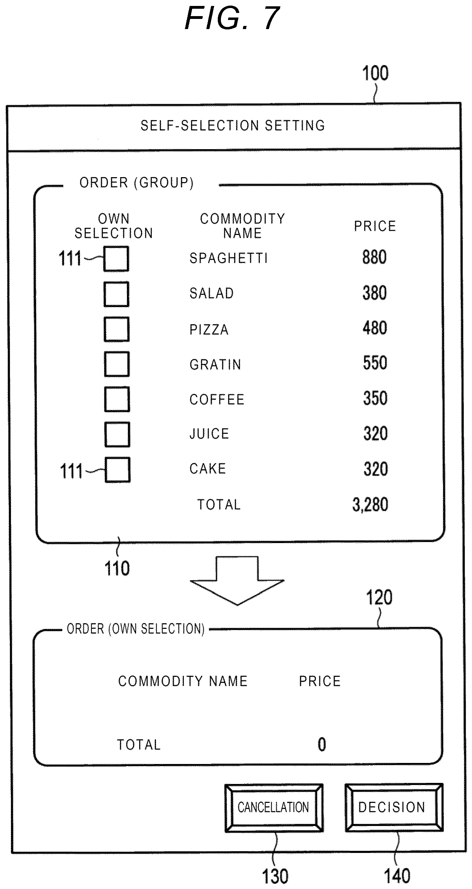

FIG. 7 is a diagram illustrating an example of the setting screen 100.

The setting screen 100 is generated by the processor 201, based on the order reception data illustrated in FIG. 4. The setting screen 100 includes display sections 110 and 120 and buttons 130 and 140.

The display section 110 illustrates a list of commodities indicated in the order reception data which is the editing target, and check boxes 111 are arranged next to names of each of the respective commodities, respectively. The respective check boxes 111 are arranged side by side with names of the commodities.

The display section 120 illustrates a list of commodities designated by an operator of the information terminal 3 displaying the setting screen 100 as a payment fee and the sum of money of the commodities. However, in the initial setting screen 100 illustrated in FIG. 7, no commodity is designated, and thus, information on the commodity is not illustrated and the total is also set to "0".

The button 130 is for the operator to declare that the setting operation performed for the setting screen 100 is canceled.

The button 140 is for the operator to declare that setting by a setting operation performed for the setting screen 100 is decided.

In Act 19, the processor 201 confirms whether or not a sharing change is made on the setting screen being displayed on the information terminal 3. If the sharing change is not made, the processor 201 determines that an answer is No, and proceeds to Act 20.

In Act 20, the processor 201 confirms whether or not cancellation declaration is made on the setting screen being displayed on the information terminal 3. If the cancellation declaration is not made, the processor 201 determines that an answer is No, and proceeds to Act 21.

In Act 21, the processor 201 confirms whether or not a decision declaration is made on the setting screen being displayed on the information terminal 3. If the decision declaration is not made, the processor 201 determines that an answer is No, and proceeds to Act 19.

Thus, in Act 19 to Act 21, the processor 201 waits for any one of the sharing change, the cancellation declaration, and the decision declaration to be made.

The operator of the information terminal 3 selects a commodity that the operator pays money for from the list of commodities illustrated in the display section 110 of the setting screen 100, and operates the information terminal 3 so that a check is input to the check box associated with the commodity.

Specifically, Mr. A first operates the information terminal 3 such that a check is input to the check box associated with "salad" and "gratin". By doing so, the operation results are notified from the information terminal 3 to the web server 20. If the notification is received, the processor 201 determines that sharing is changed and an answer is Yes in Act 19, and proceeds to Act 22.

In Act 22, the processor 201 updates the order reception data of the editing target.

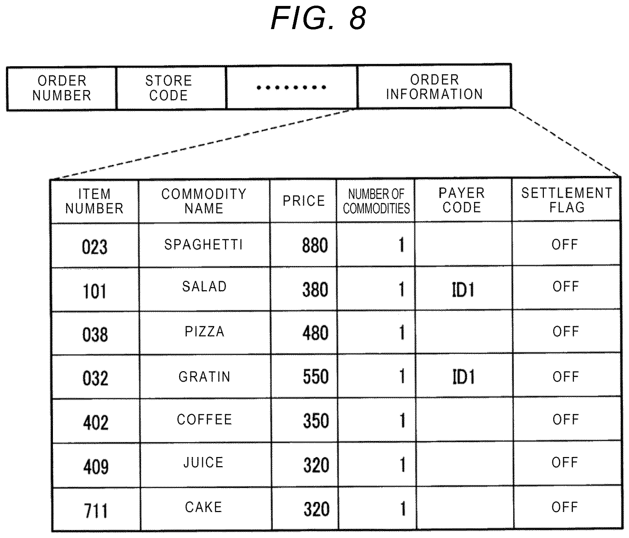

FIG. 8 is a diagram schematically illustrating the updated order reception data.

If a field of a payer code is not added to each record in the order information, the processor 201 adds the field to each record in the order information. In addition, the processor 201 adds the payer code in the field of the payer code of the record relating to the commodity to which the check box to which the check is input is associated. Here, since the operator is Mr. A, the member code of Mr. A is set in the payer code. Accordingly, "ID1" is added in the field of the payer code associated with "salad" and "gratin", respectively, as illustrated in FIG. 8. Thus, the processor 201 associates the member code "ID1" as an identification code for identifying the customer with the items "salad" and "gratin" included in the transaction list indicated in the order reception data, in accordance with an instruction of Mr. A, who is a customer. That is, as the processor 201 performs the information processing based on the web server application 203a, a computer having the processor 201 as a central processor functions as an association unit. The web server 20 is an example of an information processing device functioning as the association unit.

The processor 201 also adds a settlement flag to the order reception data. The settlement flag indicates whether or not settlement, to be described below, is completed. Here, it is assumed that, when the settlement flag is in an off state, the settlement is not completed. Here, the processor 201 initially sets all the settlement flags be in an off state.

If updating the order reception data ends in the Act 22, the processor 201 repeats the processing after Act 18. That is, the processor 201 updates the display on the information terminal 3 to the setting screen according to the updated order reception data, and then, returns to a wait state of Act 19 to Act 21.

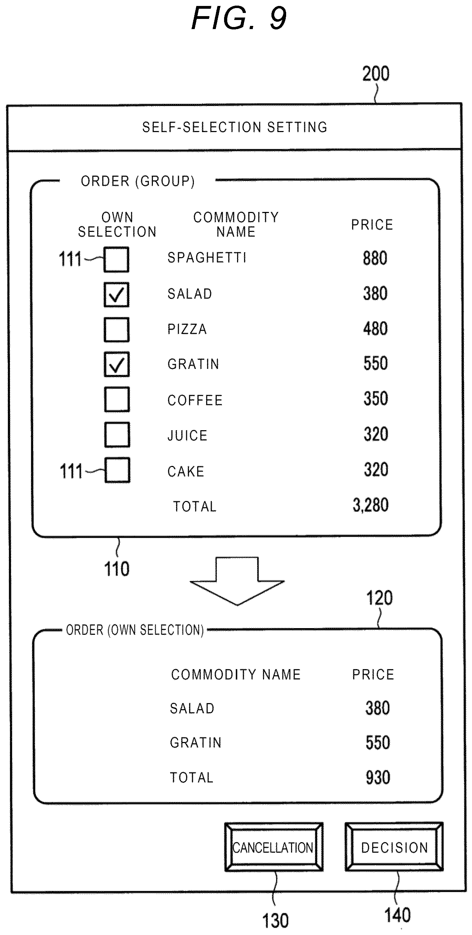

FIG. 9 is a diagram illustrating an example of the setting screen 200. In the elements illustrated in FIG. 9, the same symbols or reference numerals will be attached to the same elements as those illustrated in FIG. 7.

The setting screen 200 is generated by the processor 201, based on the order reception data illustrated in FIG. 8. In the setting screen 200, display information inside the display sections 110 and 120 are different from those of the setting screen 100.

In addition to the display information on the setting screen 100, the display section 110 illustrates check marks in check boxes 111 associated with "salad" and "gratin".

In addition to the display information on the setting screen 100, the display section 120 illustrates character strings "salad", "380", "gratin", "550", and "930". The character strings "salad" "380", "gratin", and "550" are commodity names and money represented in the record having the field of the payer code that includes the member ID of Mr. A, among records of the order information of the order reception data of the editing target. In addition, the character string "930" is a total fee.

An operator of the information terminal 3 operates the information terminal 3 such that a button 130 is pressed, if he wishes to cancel all the designations of commodity performed until now. By doing so, the operation results are notified from the information terminal 3 to the web server 20. If the notification is received, the processor 201 determines that an answer is Yes in Act 20, and proceeds to Act 23.

In Act 23, the processor 201 returns the order reception data to a state before updating is performed in Act 22. Accordingly, the processor 201 may back up all the order reception data before editing, or may back up only initial information on the changed information. Thereafter, the processor 201 repeats the processing after Act 18. That is, the processor 201 updates the display on the information terminal 3 to the initial setting screen, for example, as illustrated in FIG. 7, and then, returns to wait states of Act 19 to Act 21.

An operator of the information terminal 3 operates the information terminal 3 such that the button 140 is pressed, if the operator wishes to end setting of his/her sharing condition by the designation of commodity performed so far. By doing so, the operation results are notified from the information terminal 3 to the web server 20. If the notification is received, the processor 201 determines that an answer is Yes in Act 21, and proceeds to a wait state of Act 11. Thus, at this time, the order reception data stored in the auxiliary storage device 203 is decided to be valid.

Meanwhile, if Mr. B accesses the web server 20 by using the information terminal 3 after Mr. A does so, the processor 201 performs the processing illustrated in FIG. 6 in the same manner as described above. At this time, since Mr. B is logged in, the processor 201 sets "ID2" of the member code of Mr. B as a payer code in Act 16. In accordance with designation of commodity performed by Mr. B, the processor 201 includes "ID2" in the order reception data in association with the commodity designated in Act 22. In addition, when Act 22 is executed for the first time, the processor 201 adds record in which "ID2" is described as the payer code, in the payment information.

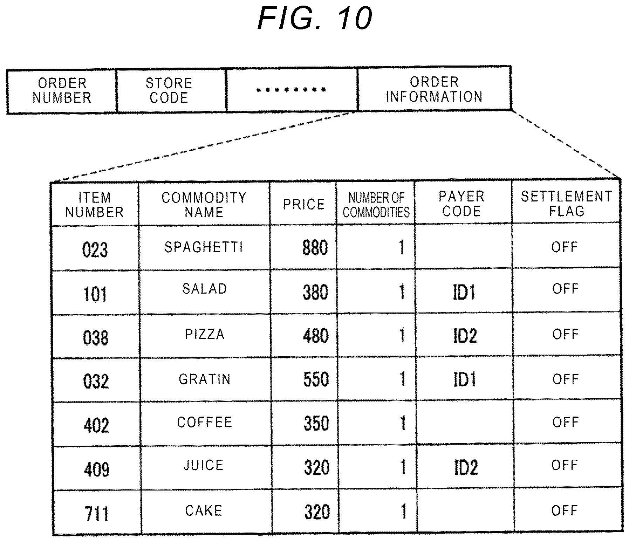

FIG. 10 is a diagram illustrating the order reception data after the order reception data illustrated in FIG. 8 is updated according to an instruction from Mr. B.

FIG. 10 illustrates a case where Mr. B designates "pizza" and "juice". Accordingly, "ID2s" are added in association with the commodity names "pizza" and "juice", respectively.

Subsequently, if Mr. C accesses the web server 20 by using the information terminal 3, the processor 201 also performs the processing illustrated in FIG. 6 in the same manner as described above. This case is the same as the case of the access made by Mr. B, but it is assumed that the processor 201 distinguishably displays a commodity previously designated by another person, a commodity not designated yet, and a commodity designated by a current operator, on the setting screen displayed in Act 18.

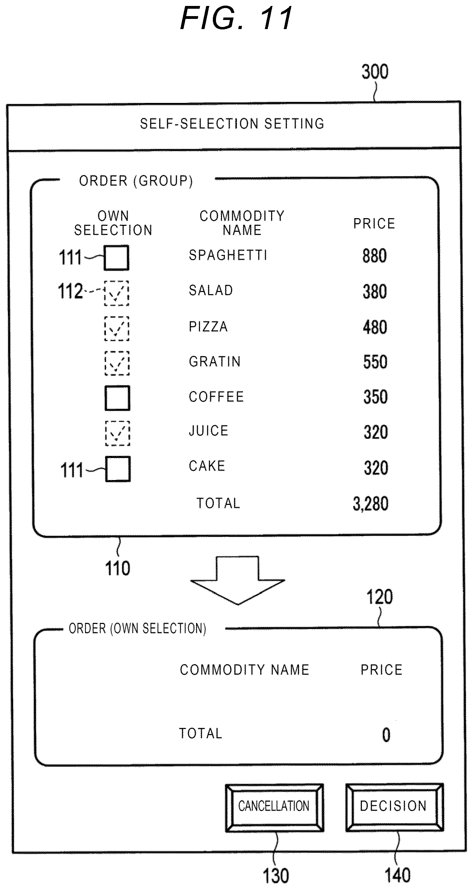

FIG. 11 is a diagram illustrating an example setting screen 300 displayed on the information terminal 3 of Mr. C, when the order reception data is in a state illustrated in FIG. 10. The same reference numerals or symbols are attached to the same elements as those illustrated in FIG. 7 among the elements illustrated in FIG. 11.

Elements designated by other persons are distinguished by denoting check boxes 112 and check marks associated with commodity names of the commodities previously designated by other persons by using dashed lines in the display section 110 on the setting screen 300.

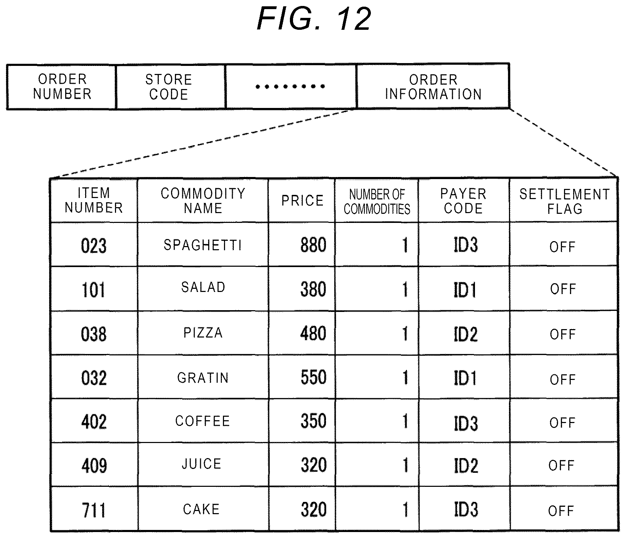

FIG. 12 is a diagram illustrating order reception data after the order reception data illustrated in FIG. 10 is updated according to an instruction of Mr. C.

FIG. 12 illustrates a state where Mr. C designates "spaghetti", "coffee", and "cake". Accordingly, "ID3s" are added in association with the commodity names "spaghetti", "coffee", and "cake", respectively.

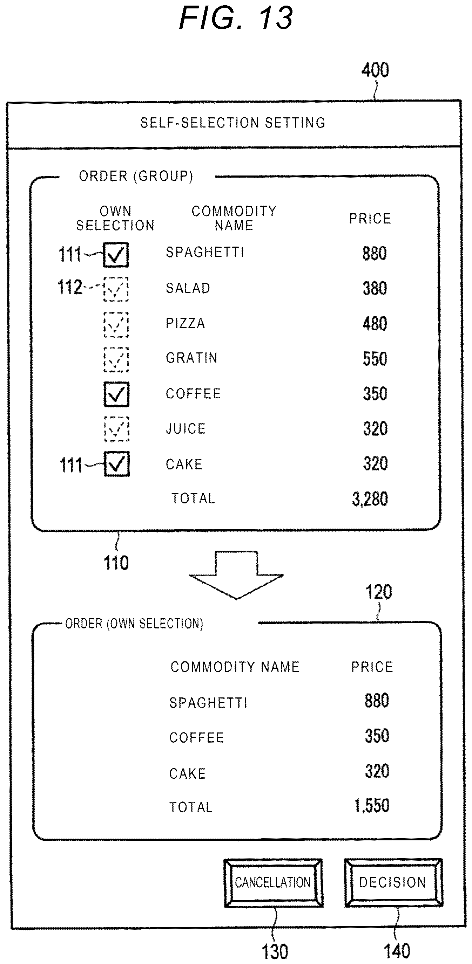

FIG. 13 is a diagram illustrating an example setting screen 400 displayed on the information terminal 3 of Mr. C, when the order reception data is in a state illustrated in FIG. 12. The same reference numerals or symbols are attached to the same elements as those illustrated in FIG. 7, among the elements illustrated in FIG. 9.

When leaving the restaurant, Mr. A, Mr. B, and Mr. C, move to a checkout counter with the order slip and request a store clerk to perform settlement accounting. The store clerk performs an operation of declaring start of the settlement accounting to the POS terminal 14. In response to this, the processor 141 starts information processing for the settlement accounting in the POS terminal 14.

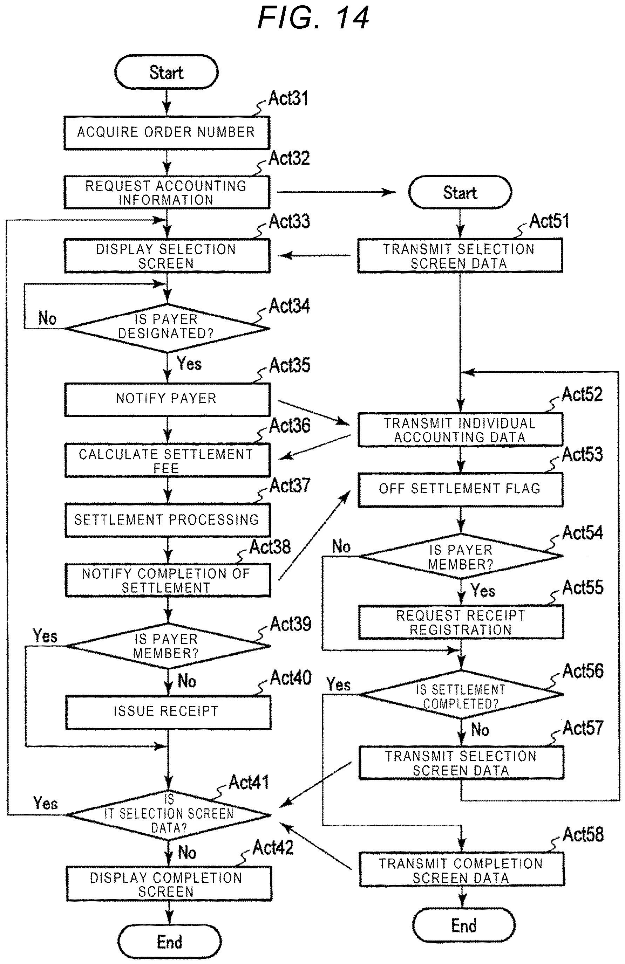

FIG. 14 is a flowchart illustrating a sequence of settlement accounting processing.

In Act 31, the processor 141 acquires an order number for identifying order reception data which is an accounting target. Specifically, for example, a store clerk causes the scanner 146 to read a code symbol printed as an order number in the order slip, or inputs the order number printed on the order slip by using the keyboard 144 or the touch panel 145. By doing so, the scanner 146, the keyboard 144 or the touch panel 145 notifies the processor 141 of the order number. The processor 141 acquires the order number in this way.

In Act 32, the processor 141 requests accounting information from the web server 20 following the notification of the order number acquired as described above. If the request is received, the processor 201 starts the information processing illustrated in FIG. 14, in the web server 20. Communication is established between the processor 201 and the POS terminal 14 which is a request source. Various notifications and transmission of data to be described below are performed through this communication.

In Act 51, the processor 201 generates a selection screen and transmits selection screen data representing the selection screen to the POS terminal 14. The selection screen is a screen prompting a store clerk to select a payer. For example, if the payer is a member, the selection screen instructs that a member code has to be input. In addition, if a non-member is included as the payer in the order reception data identified by the notified order number, the selection screen also includes a button for designating the non-member.

In Act 33, the processor 141 causes the touch panel 145 to display a selection screen based on the selection screen data.

In Act 34, the processor 141 waits for designation of the payer.

One of Mr. A, Mr. B, and Mr. C requests a store clerk to input a member code thereof. The store clerk inputs the member code to the POS terminal 14 in accordance with the request. As an example, a customer makes the display device of the information terminal 3 display a barcode representing the member code by using a function of an application for using an electronic receipt service, in the information terminal 3 owned by the customer. The store clerk reads the barcode by using the scanner 146. If the payer is a non-member, the store clerk presses the above-described button displayed on the selection screen. If there are a plurality of customers who are non-members, a plurality of the above-described buttons are displayed on the selection screen. For example, if commodities whose payers are a plurality of customers who are non-members are associated with each button, according to this, the store clerk can press a button corresponding to one such payer. If an operation of designating the payer is performed, the processor 141 determines that an answer is Yes in Act 34, and proceeds to Act 35.

In Act 35, the processor 141 notifies the web server 20 of the designated payer. Specifically, if the barcode is read by the scanner 146, the processor 141 notifies the web server 20 of the member code represented by the barcode. In addition, if a button designating a non-member is pressed, the processor 141 notifies the web server 20 of an identification code for identifying the pressed button.

That is, the processor 141 acquires the identification code of the payer as a settlement person at the time of settlement and notifies the web server 20 of the identification code. Thus, as the processor 141 performs the information processing based on the POS terminal application 143a, a computer having the processor 141 as a central processor functions as an acquisition unit and a notification unit.

In Act 52, the processor 201 generates individual accounting data for the notified payer and transmits the accounting data to the POS terminal 14.

Specifically, the processor 201 sets order reception data identified by the order number notified from the POS terminal 14 as settlement target data, when the information processing illustrated in FIG. 14 starts. Then, the processor 201 extracts records in which a code corresponding to the payer notified as described above is added as a payer code, from the settlement target data, and generates individual accounting data. Accordingly, the individual accounting data includes a settlement list which includes all commodities associated with the notified identification code. Then, as the processor 201 performs the information processing based on the web server application 203a, a computer having the processor 201 as a central processor functions as a transmission unit which transmits the above-described settlement list to the POS terminal 14 functioning as a settlement terminal.

In Act 36, the processor 141 calculates a settlement fee based on the individual accounting data. Thus, as the processor 141 performs the settlement accounting processing based on the POS terminal application 143a, a computer having the processor 141 as a central processor functions as a determination unit determining the settlement fee relating to the commodity in a settlement list.

In Act 37, the processor 141 performs settlement processing for settling the settlement fee.

In Act 38, the processor 141 notifies the web server 20 that the settlement is completed, following the notification of content of the settlement processing.

In Act 53, the processor 201 changes all the settlement flags of the records in which a code corresponding to the notified payer is added as the payer code among the records included in the settlement target data into an ON state.

In Act 54, the processor 201 confirms whether or not the payer who makes the immediately preceding settlement is a member. Then, for example, if the notification of the payer is made with the member code, the processor 201 determines that an answer is Yes and proceeds to Act 55.

In Act 55, the processor 201 requests the receipt server 30 to perform a receipt registration. When the request is made, the processor 201 sends management information included in settlement target data, individual accounting data transmitted in Act 52, and transaction detail data including the settlement content, to the receipt server 30. However, the processor 201 may not necessarily include in the transaction detail data, among the management information included in the settlement target data, the individual accounting data transmitted in Act 52, and the information included in the content of the above-described notified settlement. That is, the processor 201 requests the receipt server 30 as a management device such that the transaction detail data including information and a settlement fee relating to each of commodities as all items which are a target of completed settlement is managed in association with an identification code of a payer. Thus, as the processor 201 performs the information processing based on the web server application 203a, a computer having the processor 201 as a central processor functions as a request unit that makes the above-described request.

If a request of receipt registration is made from the web server 20 as described above, the receipt server 30 updates a receipt database such that various types of information included in the transaction detail data is reflected.

If Act 55 ends, the processor 201 proceeds to Act 56. For example, if notification of a payer is made with respect to an identification code of a button, the processor 201 determines that an answer is No in Act 54, passes Act 55, and proceeds to Act 56.

In Act 56, the processor 201 confirms whether or not settlement of all the commodities represented in the settlement target data is completed. If the record included in the settlement target data represents that the settlement flag is in an OFF state, the processor 201 determines that an answer is No and proceeds to Act 57.

In Act 57, the processor 201 generates a selection screen and transmits selection screen data representing the selection screen to the POS terminal 14. The selection screen generated here is a screen prompting a store clerk to select an unsettled payer. Thereafter, the processor 201 returns to Act 52 and performs the subsequent processing in the same manner as described above.

Meanwhile, after notifying completion of the settlement in Act 38, the processor 141 proceeds to Act 39.

In Act 39, the processor 141 confirms whether or not the payer is a member. Then, for example, if designation of the payer is not made by inputting a member code, the processor 141 determines that an answer is No and proceeds to Act 40.

In Act 40, the processor 141 controls the printer 147 to issue a receipt representing a list of commodities indicated in the individual accounting data, and results of settlement in Act 37. Thereafter, the processor 141 proceeds to Act 41. For example, if designation of a payer is made by inputting a member code, the processor 141 determines that an answer is Yes in Act 39, passes Act 40, and proceeds to Act 41.

In Act 41, the processor 141 confirms whether or not data sent from the web server 20 by performing settlement completion notification in Act 38 is the selection screen data. If the selection screen data transmitted from the web server 20 is received by the communication interface 148 as described above, the processor determines that an answer is Yes, returns to Act 33, and performs the subsequent processing in the same manner as described above. That is, the processor 141 and the processor 201 perform processing for settlement relating to shares of other payers. In this way, processing for settlement relating to each payer is sequentially performed.

If settlement of all the commodities represented in the settlement target data is completed, the processor 201 determines that an answer is Yes in Act 56. In this case, the processor 201 proceeds to Act 58.

In Act 58, the processor 201 generates a completion screen and transmits completed screen data representing the completion screen to the POS terminal 14. The completion screen generated here is a screen for notifying a store clerk that settlement relating to the transaction represented in the settlement target data is completed.

If the completion screen data is transmitted to the POS terminal 14, the processor 141 determines that an answer is No in Act 41 and proceeds to Act 42.

In Act 42, the processor 141 makes the touch panel 145 display a completion screen based on the completion screen data.

As described above, according to the order management system 1, with respect to an order managed as one transaction without specifying one member who orders for a group of a plurality of persons, payment is shared by a plurality of payers and can be settled individually. When performing accounting that includes settlement in such a form, the POS terminal 14 does not need to perform an operation for designating shares for each payer of commodities which are a target of transaction, and labor of a store clerk does not increase.

When settlement accounting is performed, a method is known in which one transaction is divided into a plurality of transactions by an operation of designating the respective shares of a plurality of payers and thereafter the plurality of transactions are individually settled. If this form is used, a store clerk has to perform the above-described operation at the time of settlement accounting, and labor of the store clerk is increased compared to a case where the order management system 1 is used. Since time required for such settlement accounting per group can be length, a store may refuse such settlement accounting, for example, at the time of congestion.

However, according to the order management system 1, although time required for accounting of one group is lengthy as compared to a case where accounting of one group is collectively performed, the time is smaller than compared to the above-described form of related art. Accordingly, if the order management system 1 is used, individual settlement described above can be sufficiently allowed even at the time of congestion and the like, and thereby, it is possible to improve customer service.

Since a customer can set his/her own share by operating the information terminal 3 owned by the customer, the customer can perform an operation while waiting for provision of commodity, eating food, and the like, and burden on the customer is also decreased.

According to the order management system 1, the POS terminal 14 divides a transaction relating to one group into a plurality of transactions relating to each of a plurality of payers, and the plurality of transactions are individually settled. Then, content of the transaction and results of settlement for each payer are issued as a receipt or are registered in the receipt server 30. Thus, a payer can confirm what type of payment he or she makes from the receipt, or can confirm afterwards by using an electronic receipt service.

In addition, according to the order management system 1, it is possible for a non-member to designate payment sharing of commodities by using an IP address as the payer code. Accordingly, even if a payer who is not a member is included, a payer for commodity can become clear, and the payment sharing of commodities can be designated appropriately and easily. That is, if only the member can designate the payment sharing of commodities, in a case where a non-member payer is included, a payer is not specified with respect to the commodity for which the payer pays money. Under such circumstances, there is a possibility that designation of the commodity may be omitted and accuracy decreases, and since a member has to carefully designate the payment sharing so as to prevent the designation from being omitted, work thereof becomes cumbersome. In contrast to this, according to the order management system 1, if there is an undesignated commodity after all payers designate the payment sharing, it turns out that designation of the commodity is omitted. In this case, if one of the payers designates again the commodity, a state of the payment sharing can be managed without designation omission.

This embodiment can be modified in various types as follows.

Calculation of a payment fee performed by the processor 141 in Act 36 of FIG. 14 may be performed by the processor 201 before Act 53, instead of being performed by the processor 141. In this case, the processor 201 includes the calculated payment fee in the individual accounting data.

The request of receipt registration performed by the processor 201 in Act 55 of FIG. 14 may be made when the processor 141 determines that an answer is Yes in Act 39, instead of being performed by the processor 201. In this case, the processor 141 does not notify the content of settlement at the time of the settlement completion notification in Act 38.

A list of arbitrary items other than the commodities provided by the restaurant may become a processing target. The items are not limited to tangible objects such as commodities, and may be intangible things such as service.

A function of the web server 20 and a function of the receipt server 30 may be realized in a single server device.

A part of the aforementioned information processing performed by the processor 141 or the processor 201 may be omitted. For example, the processor 201 may not perform Act 13 and Act 17, and may update the order reception data in accordance with an instruction of only a member.

The URL for accessing the web server 20 may be provided to a customer in an arbitrary form different from the above-described embodiment. For example, a slip representing a two-dimensional code may be printed out separately from an order slip. In addition, a two-dimensional code may be displayed on a display device of a table terminal attached to a table of a restaurant. In addition, the URL may be given to the information terminal 3 by wireless communication from an antenna, a tag or the like provided on a table or the like by using the Wi-Fi, the Bluetooth (registered trademark), near field communication (NFC) or the like.

Each function realized by the processor 141 or the processor 201 by using control processing can also be realized partially or entirely by hardware which performs information processing not based on a program such as a logic circuit or the like. In addition, each of the above-described functions can also be realized by combining software control with hardware such as the above-described logic circuit.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A server accessed from a plurality of user terminals including a first user terminal and a second user terminal, the server configured to:
communicate with a wireless hand-held terminal to receive group data,
generate first and second user interfaces from the group data,
transmit the first user interface to the first user terminal and the second user interface to the second user terminal, and
responsive to inputs made through the first and second user interfaces and received by the server, generate and transmit to a point-of-sale (POS) terminal at least first transaction data for a first user and second transaction data for a second user.

2. The server according to claim 1, wherein the group data comprise items purchased by a group of users including the first user and the second user.

3. The server according to claim 1 or 2, wherein the first and second user interfaces each include a complete list of the items purchased by the group of users.

4. The server according to claim 3, wherein the inputs to the first user interface include a first selection of the items from the complete list and the inputs to the second user interface include a second selection of the items from the complete list.

5. The server according to claim 4, wherein the transaction data for the first user is generated based on the first selection and the transaction data for the second user is generated based on the second selection.

6. The server according to any one of claims 1 to 5 further configured to:
receive settlement data from the POS terminal for each separate transaction data,
determine, based on the received settlement data, whether settlement has been completed for all the items purchased by the group of users, and
when the settlement has been completed for all the items purchased by the group of users, transmit completion screen data to the POS terminal for display by the POS terminal a completion screen indicating settlement of all the items purchased by the group of users.

7. An order management system comprising:
a plurality of devices connected to a first network, the plurality of devices including a point-of-sale (POS) terminal, a wireless hand-held terminal, and a wireless access point by which the wireless hand-held terminal is connected to the first network;
a router that connects the first network to a second network;
a plurality of user terminals connected to the second network, including a first user terminal and a second user terminal; and
the server according to any one of claims 1 to 6 connected to the second network.

8. A method of processing group data separately for a first user and a second user in an order management system comprising a plurality of devices connected to a first network, the plurality of devices including a point-of-sale (POS) terminal, a wireless hand-held terminal, and a wireless access point by which the wireless hand-held terminal is connected to the first network, a router that connects the first network to a second network, a plurality of user terminals connected to the second network, including a first user terminal and a second user terminal, and a server connected to the second network, a method of processing group data separately for the first user and the second user, the method comprising steps of:
receiving the group data from the wireless hand-held terminal to the server;
generating first and second user interfaces from the group data;
transmitting the first user interface to the first user terminal and the second user interface to the second user terminal; and
responsive to inputs made through the first and second user interfaces and received by the server, generate and transmit to the POS terminal at least first transaction data for the first user and second transaction data for the second user.

9. The method according to claim 8, wherein the group data comprise items purchased by a group of users including the first user and the second user.

10. The method according to claim 8 or 9, wherein the first and second user interfaces each include a complete list of the items purchased by the group of users.

11. The method according to claim 10, wherein the inputs to the first user interface include a first selection of the items from the list and the inputs to the second user interface include a second selection of the items from the list.

12. The method according to claim 11, wherein the transaction data for the first user is generated based on the first selection and the transaction data for the second user is generated based on the second selection.

13. The method according to any one of claims 8 to 12, further comprising steps of:
receiving settlement data from the POS terminal for each separate transaction data;
determining, based on the received settlement data, whether settlement has been completed for all the items purchased by the group of users; and
when the settlement has been completed for all the items purchased by the group of users, transmitting completion screen data to the POS terminal for display by the POS terminal a completion screen indicating settlement of all the items purchased by the group of users.

14. A non-transitory computer readable medium comprising a program causing a computer to execute the method according to any one of claims 8 to 13.
